# EUROPEAN PATENT APPLICATION

(11) **EP 4 701 252 A1**
(43) Date of publication of application: **25.02.2026**
(21) Application number: 24803085.0
(22) Date of filing: 10.05.2024
(51) Int. Cl.: H04W 12/06

(54) **COMMUNICATION METHOD, COMMUNICATION DEVICE, STORAGE MEDIUM, AND PROGRAM PRODUCT**

(30) Priority: 11.05.2023 CN 202310534021
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); CUI, Yang, Shenzhen, Guangdong 518129 (CN); ZHANG, Wanqiang, Shenzhen, Guangdong 518129 (CN)
(74) Representative: Isarpatent
(86) International application number: PCT/CN2024/092243
(87) International publication number: WO 2024/230806

(57) **Abstract**

This application provides a communication method, a communication device, a storage medium, and a program product, and may be applied to the field of 5G new radio technologies. When a communication apparatus meets an authentication trigger condition, authentication information is obtained from the communication apparatus by using an authentication request. The authentication information may be used to verify authenticity of first identification information of the communication apparatus, to implement security authentication on the communication apparatus. When a communication apparatus that passes the security authentication accesses a communication network, security of the communication network can be improved.

## Description

This application claims priority to Chinese Patent Application No. 202310534021.0, filed with the China National Intellectual Property Administration on May 11, 2023 and entitled "COMMUNICATION METHOD, COMMUNICATION DEVICE, STORAGE MEDIUM, AND PROGRAM PRODUCT", which is incorporated herein by reference in its entirety.

### TECHNICAL FIELD

This application relates to the communication field, and in particular, to a communication method, a communication device, a storage medium, and a program product.

### BACKGROUND

To improve security of a communication network, a device that accesses the communication network should be a device that meets an access condition of the communication network. The access condition may include that the device has a function defined in a communication standard of the communication network. An example of the communication network is a 5th generation (5th generation, 5G) mobile communication network, and an example of the device is a mobile equipment (mobile equipment, ME).

Currently, a method for improving the security of the communication network is as follows: A network access authentication authority performs network access authentication on a device, that is, verifies whether the device has the function defined in the communication standard of the communication network. Devices of a type to which a device that passes the authentication belongs can obtain network access licenses, so that the devices can be launched on a market, to ensure the security of the communication network after these devices access the communication network. However, this method cannot prevent a device without a corresponding license from accessing the communication network, and cannot ensure the security of the communication network.

Another method for improving the security of the communication network is as follows: A blocklist is set, some identifiers are recorded in the blocklist, and devices indicated by these identifiers are considered to be insecure (fail to meet the access condition of the communication network). Before a device accesses the communication network, a core network detects whether an identifier of the device is recorded in the blocklist, and the device is allowed to access the communication network only when the identifier of the device is not in the blocklist.

However, after the method is used, the following problem still occurs: A device that does not meet the access condition of the communication network accesses the communication network, and the security of the communication network is reduced.

### SUMMARY

This application provides a communication method, a communication device, a storage medium, and a program product, to perform authenticity verification on first identification information of a communication apparatus when the communication apparatus meets an authentication trigger condition. The authenticity verification on the first identification information can reduce an access risk of a communication network, and improve security of the communication network.

According to a first aspect, a communication method is provided. The method includes:

A first network element sends an authentication request to a communication apparatus when an authentication trigger condition is met, where the authentication request indicates the communication apparatus to determine authentication information by using an authentication credential, the authentication credential corresponds to first identification information of the communication apparatus, and the first identification information indicates an apparatus model or a communication capability of the communication apparatus; and
the first network element receives the authentication information, where the authentication information is used to verify authenticity of the first identification information of the communication apparatus.

The authentication request indicates the communication apparatus to determine the authentication information by using the authentication credential, the authentication credential corresponds to the first identification information of the communication apparatus, and the first identification information indicates the apparatus model or the communication capability of the communication apparatus. The authentication request is sent when the first network element determines that the communication apparatus meets the authentication trigger condition.

Optionally, the authentication request may include a DCC (device compliance check, device compliance check) authentication request.

Optionally, when the communication apparatus meets the authentication trigger condition, the first network element may generate the authentication request based on the first identification information, and send the authentication request to the communication apparatus.

Optionally, the authentication credential may be a credential shared by devices that are of a same type, that are of a same model, or that have a same communication capability.

According to the communication method provided in this embodiment of this application, sending of the authentication request is triggered based on a constraint of the authentication trigger condition, so that the communication apparatus determines the authentication information by using the authentication credential in response to the authentication request. The communication apparatus may send the authentication information to the first network element, and the authentication information may be used to verify the authenticity of the first identification information of the communication apparatus. Authenticity verification on the first identification information of the communication apparatus is implemented based on triggering of the authentication request, so that security of the communication apparatus that accesses a network can be ensured. Connecting a more secure communication apparatus to a communication network can reduce an access risk of the communication network, and improve security of the communication network.

With reference to the first aspect, in some implementations of the first aspect, when the first identification information indicates the apparatus model of the communication apparatus, the first identification information includes a type allocation code TAC.

Optionally, the type allocation code (TAC, type allocation code) uniquely identifies a specific device model in a specific area.

With reference to the first aspect, in some implementations of the first aspect, the first identification information is an IMEI or a PEI.

The permanent equipment identifier (PEI, permanent equipment identifier) is a device identifier used for a mobile equipment (mobile equipment, ME) in a 5G system. The IMEI (international mobile equipment identity, international mobile equipment identity) is a device identifier used for a mobile equipment in a 4G system.

With reference to the first aspect, in some implementations of the first aspect, when the first identification information indicates the communication capability of the communication apparatus, the first identification information includes at least one piece of 5G capability information supported by the communication apparatus.

Optionally, the 5G capability information is a communication capability or a communication function supported by a 5G communication standard.

With reference to the first aspect, in some implementations of the first aspect, when the first identification information indicates the apparatus model of the communication apparatus, the first identification information is a model identifier of the communication apparatus.

Optionally, the model identifier (Model ID, Model Identity Document) is a symbol that is set for the communication apparatus.

With reference to the first aspect, in some implementations of the first aspect, before that the first network element sends the authentication request to the communication apparatus, the method further includes:

The first network element sends an identifier obtaining request to the communication apparatus according to an identifier obtaining policy, where the identifier obtaining request indicates the communication apparatus to feed back the first identification information; and
the first network element receives the first identification information fed back by the communication apparatus.

With reference to the first aspect, in some implementations of the first aspect, the identifier obtaining policy includes at least one communication capability, and sending the identifier obtaining request to the communication apparatus according to the identifier obtaining policy includes:
obtaining a first communication capability of the communication apparatus; and
if it is determined that the at least one communication capability in the identifier obtaining policy includes the first communication capability, sending the identifier obtaining request to the communication apparatus.

With reference to the first aspect, in some implementations of the first aspect, the method further includes:
determining, according to a device verification policy, that the communication apparatus meets the authentication trigger condition.

With reference to the first aspect, in some implementations of the first aspect, the device verification policy includes at least one piece of identification information, and determining, according to the device verification policy, that the communication apparatus meets the authentication trigger condition includes:
if it is determined that the at least one piece of identification information in the device verification policy includes the first identification information, determining that the communication apparatus meets the authentication trigger condition.

With reference to the first aspect, in some implementations of the first aspect, the method further includes:
The first network element sends a request message to a core network element, where the request message includes the first identification information;
the first network element obtains a response message corresponding to the request message from the core network element, where the response message includes an authentication indication; and
the first network element determines, based on the authentication indication in the response message, that the communication apparatus meets the authentication trigger condition.

With reference to the first aspect, in some implementations of the first aspect, the core network element includes a unified data management UDM network element or an equipment identity register EIR network element.

With reference to the first aspect, in some implementations of the first aspect, the method further includes:
sending a device authentication request to an authentication server, where the device authentication request includes the authentication information, and the device authentication request indicates the authentication server to determine the authenticity of the first identification information based on the authentication information, to determine an authentication result of the communication apparatus; and
receiving the authentication result fed back by the authentication server, where the authentication result indicates whether the communication apparatus passes authenticity authentication.

With reference to the first aspect, in some implementations of the first aspect, the method further includes:
sending the authentication result to the communication apparatus.

According to a second aspect, a communication method is provided. The method includes: A communication apparatus receives an authentication request sent by a first network element, where the authentication request is sent when the first network element determines that the communication apparatus meets an authentication trigger condition;
the communication apparatus determines authentication information by using an authentication credential in response to the authentication request, where the authentication credential corresponds to first identification information of the communication apparatus, and the first identification information indicates a device model or a communication capability of the communication apparatus; and
the communication apparatus sends the authentication information to the first network element, where the authentication information is used to verify authenticity of the first identification information of the communication apparatus.

With reference to the second aspect, in some implementations of the second aspect, before that the communication apparatus receives the authentication request sent by the first network element, the method further includes:
the communication apparatus receives an identifier obtaining request sent by the first network element according to an identifier obtaining policy; and
the communication apparatus sends the first identification information to the first network element in response to the identifier obtaining request.

With reference to the second aspect, in some implementations of the second aspect, before that the communication apparatus determines the authentication information by using the authentication credential, the method further includes:
the communication apparatus determines the authentication credential that has a binding relationship with the first identification information of the communication apparatus, where the binding relationship includes the first identification information of the communication apparatus and the authentication credential.

With reference to the second aspect, in some implementations of the second aspect, the method further includes:
the communication apparatus receives an authentication result sent by the first network element, where the authentication result indicates whether the communication apparatus passes authenticity authentication.

According to a third aspect, a communication method is provided. The method includes:

A core network element receives a request message sent by a first network element, where the request message includes first identification information of a communication apparatus, and the first identification information indicates an apparatus model or a communication capability of the communication apparatus;
the core network element obtains a response message corresponding to the request message, where the response message includes an authentication indication, the authentication indication is used to determine that the communication apparatus meets an authentication trigger condition, the authentication trigger condition indicates the first network element to send an authentication request to the communication apparatus, the authentication request indicates the communication apparatus to determine authentication information by using an authentication credential, and the authentication credential corresponds to the first identification information of the communication apparatus; and
the core network element sends the response message to the first network element.

With reference to the third aspect, in some implementations of the third aspect, the core network element includes a unified data management UDM network element or an equipment identity register EIR network element.

With reference to the first aspect, the second aspect, or the third aspect, in some implementations of the first aspect, the second aspect, or the third aspect, the first network element is an access management network element or a session management network element.

According to a fourth aspect, a network element is provided. The network element includes a sending unit and a receiving unit.

The sending unit is configured to send an authentication request to a communication apparatus when an authentication trigger condition is met, where the authentication request indicates the communication apparatus to determine authentication information by using an authentication credential, the authentication credential corresponds to first identification information of the communication apparatus, and the first identification information indicates an apparatus model or a communication capability of the communication apparatus.

The receiving unit is configured to receive the authentication information, where the authentication information is used to verify authenticity of the first identification information of the communication apparatus.

According to a fifth aspect, a communication apparatus is provided. The communication apparatus includes a receiving unit, a responding unit, and a sending unit.

The sending unit is configured to receive an authentication request sent by a first network element, where the authentication request is sent when the first network element determines that the communication apparatus meets an authentication trigger condition.

The responding unit is configured to determine authentication information by using an authentication credential in response to the authentication request, where the authentication credential corresponds to first identification information of the communication apparatus, and the first identification information indicates a device model or a communication capability of the communication apparatus.

The sending unit is configured to send the authentication information to the first network element, where the authentication information is used to verify authenticity of the first identification information of the communication apparatus.

According to a sixth aspect, a network element is provided. The network element includes a receiving unit, a processing unit, and a sending unit.

The receiving unit is configured to receive a request message sent by a first network element, where the request message includes first identification information of a communication apparatus, and the first identification information indicates an apparatus model or a communication capability of the communication apparatus.

The processing unit is configured to obtain a response message corresponding to the request message, where the response message includes an authentication indication, the authentication indication is used to determine that the communication apparatus meets an authentication trigger condition, the authentication trigger condition indicates the first network element to send an authentication request to the communication apparatus, the authentication request indicates the communication apparatus to determine authentication information by using an authentication credential, and the authentication credential corresponds to the first identification information of the communication apparatus.

The sending unit is configured to send the response message to the first network element.

According to a seventh aspect, a communication device is further provided, and includes a processor and a memory. The memory is configured to store a computer program. The processor is configured to invoke the computer program from the memory and run the computer program, to cause the apparatus to perform the method in any possible implementation of any one of the foregoing aspects.

Optionally, there are one or more processors, and there are one or more memories.

Optionally, the memory and the processor may be integrated together, or the memory and the processor may be separately disposed.

Optionally, the communication apparatus further includes a transmitting machine (transmitter) and a receiving machine (receiver). The transmitting machine and the receiving machine may be separately disposed, or may be integrated together, and are referred to as a transceiver machine (transceiver).

According to an eighth aspect, this application provides a processor, including an input circuit, an output circuit, and a processing circuit. The processing circuit is configured to: receive a signal through the input circuit, and transmit a signal through the output circuit, to cause the processor to perform the method in any possible implementation of any one of the foregoing aspects.

**In** a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a ninth aspect, a computer-readable storage medium is provided. The computer-readable storage medium stores a computer program (which may also be referred to as code or instructions). When the computer program is run on a computer, the computer is caused to perform the method in any possible implementation of any one of the foregoing aspects.

According to a tenth aspect, a computer program product is provided. The computer program product includes a computer program (which may also be referred to as code or instructions). When the computer program is run, a computer is caused to perform the method in any possible implementation of any one of the foregoing aspects.

### BRIEF DESCRIPTION OF DRAWINGS

FIG. 1 is a diagram of a communication system to which an embodiment of this application is applicable;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7A and FIG. 7B are a schematic flowchart of another communication method according to an embodiment of this application;
FIG. 8 is a schematic flowchart of another communication method according to an embodiment of this application;
FIG. 9A and FIG. 9B are a schematic flowchart of another communication method according to an embodiment of this application;
FIG. 10 is a schematic flowchart of another communication method according to an embodiment of this application;
FIG. 11 is a block diagram of a network element according to an embodiment of this application;
FIG. 12 is a block diagram of a communication apparatus according to an embodiment of this application;
FIG. 13 is a block diagram of another network element according to an embodiment of this application; and
FIG. 14 is a block diagram of a communication apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a worldwide interoperability for microwave access (worldwide interoperability for microwave access, WiMAX) communication system, or another evolved communication system. The 5G system usually includes the following three major application scenarios: enhanced mobile broadband (enhanced mobile broadband, eMBB), ultra-reliable and low-latency communications (ultra-reliable and low-latency communications, URLLC), and massive machine-type communication (massive machine-type communication, mMTC).

A 5G communication network supports a plurality of communication apparatuses in accessing the network to obtain network services. To implement security of the communication network, the communication apparatus generally needs to establish access to the communication network, and network access authentication needs be performed on the communication apparatus before the access to the communication network, to ensure secure and stable running of the network.

The communication apparatus in embodiments of this application may include a user equipment (user equipment, UE), a mobile station (mobile station, MS), a mobile terminal (mobile terminal, MT), an access terminal, a subscriber unit, a subscriber station, a mobile station, a remote station, a remote terminal, a mobile equipment, a user terminal, a terminal, a wireless communication apparatus, a user agent, a user apparatus, or the like.

The communication apparatus may be a device that provides voice/data connectivity for a user, for example, a handheld device or a vehicle-mounted device with a wireless connection function. Currently, the terminal may be, for example, a vehicle, a mobile phone (mobile phone), a tablet computer, a notebook computer, a handheld computer, an internet of things sensor, a customer-premises equipment (customer-premises equipment, CPE), an industrial robot mobile internet device (mobile internet device, MID), a wearable device, a virtual reality (virtual reality, VR) device, an augmented reality (augmented reality, AR) device, a wireless terminal in industrial control (industrial control), an uncrewed aerial vehicle (uncrewed aerial vehicle), a wireless terminal in self driving (self driving), a wireless terminal in remote medical surgery (remote medical surgery), a wireless terminal in smart grid (smart grid), a wireless terminal in transportation safety, a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, an uncrewed aerial vehicle multimedia device, a streaming media device, a communication apparatus in a 5G network, or a communication apparatus in a future evolved public land mobile communication network (public land mobile network, PLMN). This is not limited in embodiments of this application.

In addition, the communication apparatus may alternatively be a mobile equipment (mobile equipment, ME), and the mobile equipment and a USIM (Universal Subscriber Identity Module, subscriber service identity module) may form a UE together. The ME may be a UE with no USIM inserted/embedded.

In addition, the communication apparatus may alternatively be an access network device. Because a security protection enabling procedure in which a control plane is decoupled from a user plane is also related, the access network device may be a base station, a relay station, an access point, a vehicle-mounted device, a network side device, or the like.

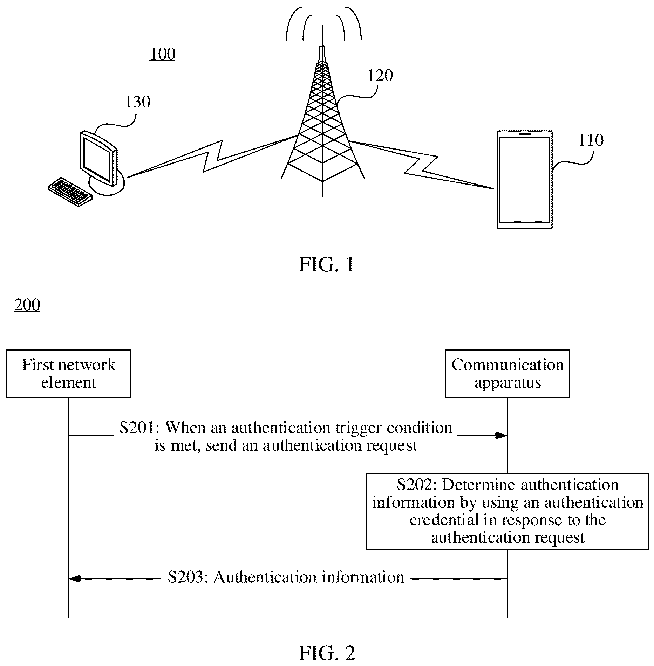

For ease of understanding of embodiments of this application, a communication system 100 to which embodiments of this application are applicable is first described in detail with reference to FIG. 1.

The communication system 100 may include a mobile phone 110, a mobility management network element (access and mobility management function, AMF) 120, and an authentication server 130. The mobile phone 110 may initiate a network access request to the mobility management network element 120. The AMF 120 may obtain an identifier of the mobile phone 110, for example, a PEI (permanent equipment identifier, permanent equipment identifier), and push the identifier of the mobile phone 110 to the authentication server 130. The authentication server 130 may maintain a blocklist, and detect whether the identifier of the mobile phone 110 is in the blocklist. If the identifier of the mobile phone 110 is not in the blocklist, it may be determined that authentication on the mobile phone 110 succeeds. In this case, the authentication server 130 may indicate the AMF 120 to control the mobile phone 110 to access a communication network. However, during actual application, the mobile phone identifier is easy to be forged, and an identifier authentication manner is low in security. A phenomenon that a communication apparatus that does not meet an authentication trigger condition accesses the communication network still exists, and this reduces security of the communication network.

In view of this, embodiments of this application provide a communication method and a communication device, to help improve authentication security and reliability of the communication apparatus.

In embodiments of this application, a terminal device like the communication apparatus, the mobility management network element, or the authentication server may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a communication apparatus or a network device, or a functional module that is in a communication apparatus or a network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD), or a digital versatile disc (digital versatile disc, DVD)), or a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

To clearly describe the technical solutions in embodiments of this application, terms such as "first" and "second" are used in embodiments of this application to distinguish between same items or similar items that provide basically same functions or purposes. For example, a first dataset and a second dataset are used to distinguish between different datasets, and a sequence of the first dataset and the second dataset is not limited. A person skilled in the art may understand that the terms such as "first" and "second" do not limit a quantity or an execution sequence, and the terms such as "first" and "second" do not indicate a definite difference.

It should be noted that, in this application, words such as "example" or "for example" are used for representing giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

In addition, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, or b, or c, or a and b, or a and c, or b and c, or a, b, and c, where a, b, and c may be single, or may be plural.

In addition, a "protocol" in embodiments of this application may be a standard protocol in the communication field, for example, may include a long term evolution (long term evolution, LTE) protocol, a new radio (new radio, NR) protocol, a 6G protocol, and a related protocol applied to a future communication system. This is not limited in this application.

In embodiments shown below, "protocol agreement" may be defined in a protocol or predefined. The "protocol agreement" may be implemented by pre-storing corresponding code or a table in a device (for example, including a terminal device and a network device), or implemented in another manner that may indicate related information. A specific implementation of the "protocol agreement" is not limited in this application.

The following describes in detail embodiments provided in this application.

In embodiments of this application, a communication apparatus and a network element are used as examples for description. It should be understood that the communication apparatus may be replaced with an apparatus or a chip that can implement a function similar to that of a terminal device, or the network element may be replaced with an apparatus or a chip that can implement a function similar to that of the network device. A name of the apparatus or the chip is not limited in embodiments of this application.

FIG. 2 is a schematic flowchart of a communication method 200 according to an embodiment of this application. As shown in FIG. 2, the method 200 may include the following steps.

S201: When an authentication trigger condition is met, a first network element sends an authentication request to a communication apparatus. Correspondingly, the communication apparatus receives the authentication request sent by the first network element.

The authentication request indicates the communication apparatus to determine authentication information by using an authentication credential, the authentication credential corresponds to first identification information of the communication apparatus, and the first identification information indicates an apparatus model or a communication capability of the communication apparatus. The authentication request is sent when the first network element determines that the communication apparatus meets the authentication trigger condition.

Optionally, the authentication request may include a DCC (device compliance check, device compliance check) authentication request, or the authentication request is a DCC authentication request. The authentication request is a message that requests the communication apparatus to perform device compliance check. The first identification information is a symbol that may be used to distinguish or identify different communication apparatuses, and communication apparatuses that are of different apparatus models or that have different communication capabilities may be distinguished by using different first identification information.

In a possible design, the first network element may be the AMF in the communication system 100. In another possible design, the first network element may be an SMF in the communication system 100. That the authentication trigger condition is met may mean that the communication apparatus meets the authentication trigger condition. The first network element may send the authentication request to the communication apparatus when determining that the communication apparatus meets the authentication trigger condition.

For example, when the communication apparatus meets the authentication trigger condition, the first network element may generate the authentication request based on the first identification information, and send the authentication request to the communication apparatus.

Optionally, the authentication trigger condition may include an authentication trigger condition that is locally configured by the first network element, and may specifically include: a specific time range, a specific location range, a specific communication capability, or triggering device authentication by default.

The authentication trigger condition includes the specific time range. To be specific, when the first network element receives a first specific message sent by the communication apparatus, if receiving time of the first specific message is within the specific time range, the first network element determines that the communication apparatus meets the authentication trigger condition.

Alternatively, the authentication trigger condition includes the specific location range. To be specific, when the first network element determines that a location of the communication apparatus is within the specific location range, for example, when the first network element receives a second specific message sent by the communication apparatus, if the second specific message indicates that the location of the communication apparatus is within the specific location range or it is determined, in another positioning manner, that the location of the communication apparatus is within the specific location range, the first network element determines that the communication apparatus meets the authentication trigger condition. In the another positioning manner, the location of the communication apparatus may be determined through a 5G positioning procedure, or the location of the communication apparatus may be obtained from an access network element.

Alternatively, the authentication trigger condition includes the specific communication capability. In this case, when determining that the communication capability of the communication apparatus includes the specific communication capability, the first network element determines that the communication apparatus meets the authentication trigger condition.

Alternatively, the authentication trigger condition includes triggering the device authentication by default. To be specific, when the first network element receives a third specific message sent by the communication apparatus, the first network element considers by default that the communication apparatus meets the authentication trigger condition.

It should be noted that the specific message obtained by the first network element from the communication apparatus may be any interaction message between the first network element and the communication apparatus, or may be a specific message, for example, a registration request or a session establishment request. In this embodiment, "first", "second", and "third" are used only to distinguish between different specific messages received under different authentication trigger conditions in terms of names. During actual application, the first specific message, the second specific message, and the third specific message may be the same or may be different.

S202: The communication apparatus determines the authentication information by using the authentication credential in response to the authentication request.

For example, the authentication credential is credential content that is set for the communication apparatus and that is used to perform DCC authentication. The credential content may be cryptographic information, for example, may be any information such as a password, a key, a certificate, or a digital token.

In a possible design, the communication apparatus may be the mobile phone 110 in the communication system 100. A binding relationship may be set between the authentication credential and the first identification information of the communication apparatus, and the binding relationship may be stored in the authentication server 130 of the communication system 100. Certainly, the binding relationship may alternatively be set in the communication apparatus, to help the communication apparatus generate the authentication information by using the authentication credential and the first identification information.

For example, the authentication credential in the communication apparatus may be an authentication credential preconfigured in the communication apparatus. In other words, before the communication apparatus is delivered from a factory, an apparatus manufacturer, for example, a device vendor, may configure the authentication credential of the communication apparatus in the communication apparatus. In addition, the first identification information may also be configured in the communication apparatus by the apparatus manufacturer.

Optionally, the authentication credential may be a credential shared by devices that are of a same type, that are of a same model, or that have a same communication capability. The authentication credential may be issued by an authentication authority to the communication apparatus. It should be additionally noted that, if the communication apparatus supports a plurality of communication capabilities, an authentication authority server may set at least one authentication credential for the communication apparatus, and there is a correspondence between the at least one authentication credential and at least one communication capability.

In another possible design, determining the authentication information by using the authentication credential in step 202 may include: generating the authentication information by using the authentication credential and the first identification information.

Further, optionally, digital signature processing is performed on the first identification information of the communication apparatus by using the authentication credential, to obtain first signature information, to use the first signature information and the first identification information as the authentication information.

Correspondingly, the first network element may receive the authentication information corresponding to the first signature information and the first identification information.

In this embodiment, digital signature processing is performed on the first identification information by using the authentication credential, to obtain the first signature information, to use the first signature information and the first identification information as the authentication information. The first identification information and the first signature information of the communication apparatus are sent to the first network element by using the authentication information, and then security authentication is performed on the communication apparatus by using the first identification information and the first signature information, to implement effective security authentication on the communication apparatus.

Further, optionally, generation time of the authentication information is determined, and digital signature processing is performed on the first identification information of the communication apparatus and the generation time of the authentication information by using the authentication credential, to obtain second signature information, to use the second signature information, the generation time of the authentication information, and the first identification information as the authentication information.

Correspondingly, the first network element may receive the second signature information, the generation time of the authentication information, and the authentication information corresponding to the first identification information.

In this embodiment, when the signature information is generated by using the authentication credential, in addition to performing digital signature processing on the first identification information, a digital signature is further executed on the generation time of the authentication information, to obtain the corresponding second signature information obtained by performing digital signature processing on the first identification information and the generation time of the authentication information. The second signature information is more complex and content is more comprehensive. When the second signature information, the generation time of the authentication information, and the first identification information are used as the authentication information, content of the authentication information may be extended, so that the generation time of the authentication information is also used as one piece of authentication information, and security authentication is performed on the communication apparatus from a plurality of dimensions, to improve effectiveness of security authentication on the communication apparatus. This further reduces an access risk of a communication network, and improves security of the communication network.

S203: The communication apparatus sends the authentication information to the first network element. Correspondingly, the first network element receives the authentication information. The authentication information is used to verify authenticity of the first identification information of the communication apparatus.

Optionally, the first network element may verify the authenticity of the first identification information of the communication apparatus by using the received authentication information.

For example, the communication apparatus may be the mobile phone 110 shown in the communication system 100.

According to the communication method provided in this embodiment of this application, sending of the authentication request is triggered based on a constraint of the authentication trigger condition, so that the communication apparatus determines the authentication information by using the authentication credential in response to the authentication request. The communication apparatus may send the authentication information to the first network element, and the authentication information may be used to verify the authenticity of the first identification information of the communication apparatus. Authenticity verification on the first identification information of the communication apparatus is implemented based on triggering of the authentication request, so that security of the communication apparatus that accesses the network can be ensured. Connecting a more secure communication apparatus to the communication network can reduce the access risk of the communication network, and improve the security of the communication network.

In an optional implementation, when the first identification information indicates the apparatus model of the communication apparatus, the first identification information includes a type allocation code TAC.

Optionally, the type allocation code (TAC, type allocation code) uniquely identifies a specific device model in a specific area. For example, an A1-model mobile phone in a market of Country C, an A2-model mobile phone in the market of Country C, and an A1-model mobile phone in a market of Country M may be respectively allocated with corresponding type allocation codes. It should be noted that communication apparatuses of a same model and with a same hardware configuration may have different TACs in different areas. The first identification information may include the TAC of the communication apparatus.

In this embodiment, the TAC is used as the first identification information of the communication apparatus, so that corresponding credential information can be set from a dimension of the TAC, and a TAC field of an IMEI can be reused. In this way, all communication devices that have TAC fields that are partially the same can use TACs as the first identification information to perform security authentication, to implement security authentication on the communication device from a perspective of the TAC, and effectively improve authentication security and effectiveness of the communication device. This further reduces the access risk of the communication network, and improves the security of the communication network.

Further, optionally, the first identification information is an IMEI or a PEI.

The permanent equipment identifier (PEI, permanent equipment identifier) is a device identifier used for a mobile equipment (mobile equipment, ME) in a 5G system. The IMEI (international mobile equipment identity, international mobile equipment identity) is a device identifier used for a mobile equipment in a 4G system.

The IMEI may include a type allocation code TAC, a serial number (serial number), and a check digit (check digit, CD). The serial number may be allocated by a manufacturer of the communication apparatus. The check digit may be obtained through calculation based on the TAC and the serial number. The check digit may provide a specific tamper resistance function. However, during actual application, the calculation of the check digit is simple, and tamper resistance performance of the check digit is weaker than that of another cryptographic method, for example, integrity protection.

Optionally, in addition to the TAC, the serial number, and the check digit, the PEI may further include a PEI type (PEI Type). PEI types may indicate different identifier types, and the PEI types may include an IMEI version number and an IMEI software version number (IMEI software version number, IMEISV). In other words, the PEI may include the IMEI and/or the IMEISV.

In this embodiment, a TAC in IMEI or PEI information is used as the first identification information, so that security authentication can be performed on the communication apparatus from a perspective of an identifier, to improve verification security of the communication apparatus. In addition, the first identification information is quickly determined by using the IMEI or PEI information, so that efficiency of obtaining the first identification information in a device authentication process can be further improved, and information utilization of the IMEI or PEI information can be improved.

In another optional implementation, when the first identification information indicates the communication capability of the communication apparatus, the first identification information includes at least one piece of 5G capability information supported by the communication apparatus.

Optionally, the 5G capability information is a communication capability or a communication function supported by a 5G communication standard. In addition, the first identification information may further include the at least one piece of 5G capability information supported by the communication apparatus. Each piece of 5G capability information corresponds to one communication function of the 5G system. For example, the 5G capability information may include a 5G session offloading capability and a 5G multi-antenna capability. The 5G capability information may include information such as a capability identifier, a capability name, and a number.

In this embodiment, the at least one piece of 5G capability information supported by the communication apparatus is used as the first identification information, so that different communication apparatuses can be distinguished from a perspective of a 5G function provided by the communication apparatuses. Further, security authentication on the communication apparatus may be implemented by using the first identification information from a perspective of the communication capability. The at least one piece of 5G capability information is used as the first identification information, so that the communication capability of the communication apparatus can be accurately defined, and security authentication is performed on the communication apparatus from a perspective or a dimension of the communication capability, to improve security and effectiveness of capability authentication on the communication apparatus. This further reduces the access risk of the communication network, and improves the security of the communication network.

In addition, in another optional implementation, when the first identification information indicates the communication capability of the communication apparatus, the first identification information may alternatively be at least one piece of capability information supported by a target mobile communication technology. The target mobile communication technology may include a 4th generation mobile communication technology, a 6th generation mobile communication technology, a more advanced 7G mobile communication technology, or the like. In other words, in addition to a 5G communication system, this technical solution is also applicable to a 4G communication system, a 6G communication system, or even a more advanced communication system. In this embodiment, a type of a communication technology to which the communication capability represented by the first identification information is applicable is not excessively limited.

**In** another optional implementation, when the first identification information indicates the apparatus model of the communication apparatus, the first identification information is a model identifier of the communication apparatus.

Optionally, the model identifier (Model ID, Model Identity Document) is a symbol that is set for the communication apparatus. Model identifiers of communication apparatuses of a same type are the same. For example, model identifiers of A1-type mobile phones in Country C may all be set to "00001". Alternatively, in any area, models of the A1-type mobile phones may all be set to "00001".

In this embodiment, the model identifier is used as the first identification information, and security authentication is performed on the communication apparatus from a dimension of the model identifier, to implement effectiveness and reliability of the security authentication on the communication apparatus. This further reduces the access risk of the communication network, and improves the security of the communication network.

In a possible design, before the communication apparatus performs step 203, the method further includes:

The communication apparatus determines the authentication credential that has a binding relationship with the first identification information of the communication apparatus, where the binding relationship includes the first identification information of the communication apparatus and the authentication credential.

Optionally, the binding relationship may be set in the communication apparatus. The binding relationship may include the first identification information of the communication apparatus and the authentication credential.

In this embodiment, the binding relationship between the first identification information of the communication apparatus and the authentication credential may be established, and authentication credentials of different communication apparatuses may be efficiently managed by setting the binding relationship. The authentication credential that has the binding relationship with the first identification information participates in generation of the authentication information, so that security authentication performed on the communication apparatus by using the authentication information is related to the first identification information of the communication apparatus. The binding relationship is used to impose an authentication constraint on the security authentication of the communication apparatus, to effectively improve the authentication security of the communication apparatus.

In an embodiment, the binding relationship between the authentication credential and the first identification information may be pre-established.

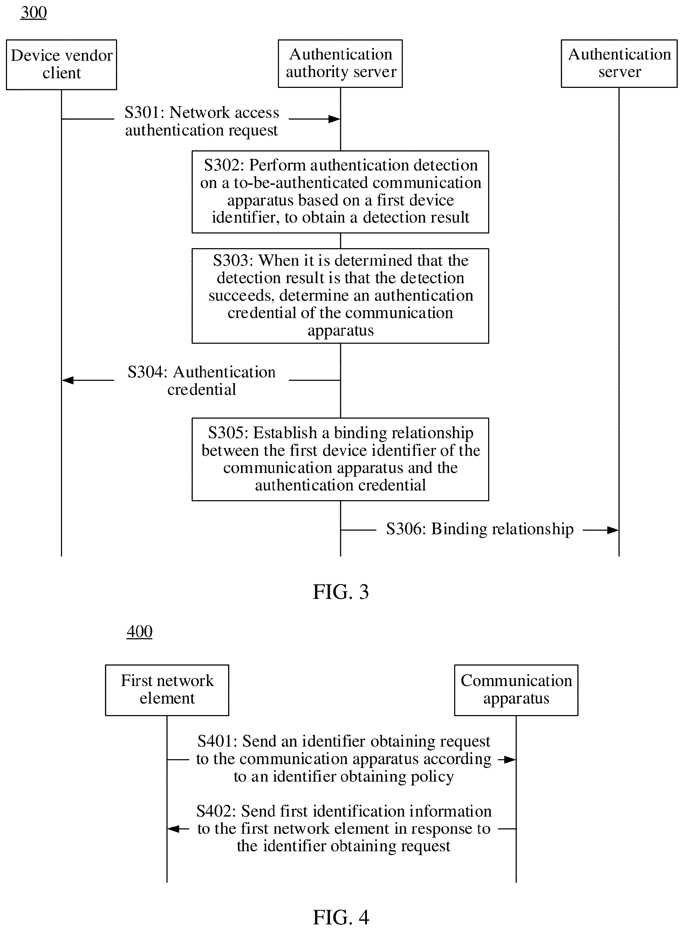

FIG. 3 is a schematic flowchart of a communication method 300 according to an embodiment of this application. The method may include the following steps.

S301: A device vendor client sends a network access authentication request to an authentication authority server, where the network access authentication request may include a first device identifier of a to-be-authenticated communication apparatus. Correspondingly, the authentication authority server receives the authentication request of the communication apparatus.

The device vendor client may be a user equipment (UE, user equipment) corresponding to a device manufacturer of the communication apparatus. The authentication authority server belongs to an authentication authority, and is responsible for managing a network access credential and the communication apparatus. In addition, the authentication authority server may alternatively belong to an operator.

S302: The authentication authority server may perform authentication detection on the to-be-authenticated communication apparatus based on the first device identifier, to obtain a detection result.

Optionally, step 302 may include: performing, based on an apparatus model indicated by the first device identifier, authentication detection on the communication apparatus corresponding to the apparatus model, where the authentication detection may specifically be detection on each communication function related to the apparatus model, to obtain the detection result of the communication apparatus. Step 302 may alternatively include: performing capability detection on the communication apparatus based on a first communication capability indicated by the first device identifier, to obtain a detection result of the communication apparatus.

Optionally, step 302 may alternatively include: querying whether there is a historical detection result of the first device identifier, and if there is a historical detection result of the first device identifier, using the historical detection result as a detection result of the to-be-detected communication apparatus.

S303: When determining that the detection result is that the detection succeeds, the authentication authority server determines an authentication credential of the communication apparatus.

Optionally, in step 303, determining the authentication credential of the communication apparatus may include: The authentication authority server may query whether the first device identifier has a binding relationship. If the first device identifier has a binding relationship, the authentication authority server obtains an authentication credential in the binding relationship corresponding to the first device identifier, to use the authentication credential in the binding relationship as the authentication credential of the communication apparatus. If the first device identifier has no binding relationship, the authentication authority server generates an authentication credential for the communication apparatus.

S304: The authentication authority server may send the authentication credential of the communication apparatus to the device vendor client.

In some embodiments, the method may further include the following steps.

S305: The authentication authority server may establish the binding relationship between the first device identifier of the communication apparatus and the authentication credential.

S306: Send the binding relationship between the first device identifier and the authentication credential to the authentication server. Correspondingly, the authentication server may receive and store the binding relationship.

In this embodiment, the device vendor client and the authentication authority server interact with each other, so that authentication detection on an apparatus function or capability of the communication apparatus can be implemented. When the authentication detection on the communication apparatus succeeds, the authentication credential is determined for the communication apparatus, to establish the binding relationship between the first device identifier of the communication apparatus and the authentication credential. Establishment of the binding relationship can be associated with authentication of the device identifier. In this way, security authentication is performed on the communication apparatus by using the binding relationship, and effectiveness of the security authentication on the communication apparatus is improved. This further reduces an access risk of a communication network, and improves security of the communication network.

FIG. 4 is a schematic flowchart of a communication method 400 according to an embodiment of this application. As shown in FIG. 4, a difference from the foregoing embodiment lies in that before sending an authentication request to a communication apparatus, the method 400 may include the following steps.

S401: A first network element sends an identifier obtaining request to the communication apparatus according to an identifier obtaining policy. Correspondingly, the communication apparatus receives the identifier obtaining request. The identifier obtaining request indicates the communication apparatus to feed back first identification information.

S402: The communication apparatus sends the first identification information to the first network element in response to the identifier obtaining request. Correspondingly, the first network element receives the first identification information fed back by the communication apparatus.

Optionally, step 401 may include: generating the identifier obtaining request according to the identifier obtaining policy; and sending the identifier obtaining request to the communication apparatus. The identifier obtaining request may be a command or an instruction for requesting to obtain an identifier from the communication apparatus. The communication apparatus may identify the identifier obtaining request, and send the first identification information to the first network element.

Optionally, the identifier obtaining policy is a rule formulated for obtaining the identification information of the communication apparatus. The identifier obtaining policy may include an obtaining policy that is locally configured by the first network element, and may specifically include: a specific time range, a specific location range, a specific communication capability, or triggering device authentication by default.

The identifier obtaining policy includes the specific time range, and step 401 may include: when current time is within the specific time range, sending the identifier obtaining request to the communication apparatus. Alternatively, the identifier obtaining policy may include the specific location range, and step 401 may include: when the first network element determines that a location of the communication apparatus is within the specific location range, sending the identifier obtaining request to the communication apparatus. Alternatively, the identifier obtaining policy may include the specific communication capability, and step 401 may include: when the first network element determines that a communication capability of the communication apparatus includes the specific communication capability, sending the identifier obtaining request to the communication apparatus. Alternatively, the identifier obtaining policy includes triggering the device authentication by default, and step 401 may include: When the first network element receives a network access request of the communication apparatus, the first network element may automatically send the identifier obtaining request to the communication apparatus by triggering the device authentication by default.

Further, optionally, before step 401 is performed, the method may further include: The first network element receives the network access request sent by the communication apparatus. The network access request may be information that is initiated by the communication apparatus and that is used to request to register with a 5G network, for example, a registration request (registration request). The network access request may be a start condition of an authentication procedure of the communication apparatus. When detecting that a user triggers a network access operation, the communication apparatus may generate the network access request, and send the network access request to the first network element. In some embodiments, the network access request sent by the communication apparatus may include at least one piece of 5G capability information of the communication apparatus, so that the at least one piece of 5G capability information of the communication apparatus is carried in the network access request, information reuse of the network access request is implemented, and information transmission efficiency is improved.

In this embodiment, the identifier obtaining request may be sent to the communication apparatus according to the identifier obtaining policy. The first network element determines, according to the identifier obtaining policy, to obtain the first identification information of the communication apparatus. The to-be-authenticated communication apparatus can be accurately marked based on the first identification information, to start automatic authentication on the communication apparatus, and improve authentication efficiency and accuracy.

Certainly, in addition to actively sending the identifier obtaining request to the communication apparatus by the first network element, the communication apparatus may alternatively actively send the first identification information to the first network element. Correspondingly, the first network element may directly receive the first identification information sent by the communication apparatus. Further, the communication apparatus may actively send the first identification information to the first network element on a premise that security protection between the communication apparatus and the first network element is enabled.

In a possible design, when the first identification information indicates an apparatus model of the communication apparatus, the first identification information is a model identifier of the communication apparatus. The communication apparatus may actively send the model identifier of the communication apparatus to the first network element. The first network element may receive the first identification information sent by the communication apparatus, query a binding relationship of the model identifier, to obtain an authentication credential bound to the model identifier, and determine authentication information based on the authentication credential and the model identifier. For determining the authentication information, refer to the descriptions in the foregoing embodiments. Details are not described herein again.

In this embodiment, the communication apparatus may actively send the first identification information, that is, the model identifier, to the first network element, so that the first network element obtains the first identification information in time, and efficiency of obtaining the first identification information is improved.

In an optional implementation, the identifier obtaining policy may further include a communication capability that is uniformly set and that has an identifier feedback requirement. The identifier obtaining policy includes at least one communication capability, and step 401 may include:
obtaining a first communication capability of the communication apparatus; and
if it is determined that the at least one communication capability in the identifier obtaining policy includes the first communication capability of the communication apparatus, sending the identifier obtaining request to the communication apparatus.

Optionally, that the at least one communication capability in the identifier obtaining policy includes the first communication capability of the communication apparatus means that the at least one communication capability in the identifier obtaining policy includes a communication capability that is the same as the first communication capability.

Optionally, the communication capability may include identification information defined for a communication function supported by a device having a device compliance check capability. The communication capability may be, for example, any piece of identification information such as a capability version identifier, a capability identifier, or a capability name. The first communication capability may be identification information corresponding to a communication function supported by the communication apparatus, for example, may include any piece of identification information such as a first capability version identifier, a first capability identifier, or a first capability name. Whether the communication apparatus has an authentication requirement is determined from an overall dimension of the communication capability, so that efficiency of obtaining the identification information can be improved. Identifier types of the at least one communication capability and the first communication capability are the same, for example, both may be version identifiers.

Optionally, obtaining the first communication capability of the communication apparatus may include: obtaining at least one piece of 5G capability information supported by the communication apparatus. The at least one communication capability in the identifier obtaining policy may include a target 5G feature corresponding to each of the at least one communication capability. A target 5G feature corresponding to any communication capability may include at least one 5G feature.

That the at least one communication capability in the identifier obtaining policy includes the first communication capability of the communication apparatus may include: There is a target 5G feature that is the same as the at least one piece of 5G capability information of the communication apparatus and that is in the target 5G feature corresponding to each of the at least one communication capability, to determine that the at least one communication capability includes the first communication capability. Whether the communication apparatus has an authentication requirement is determined from a dimension of the 5G capability information, to confirm a requirement for the communication apparatus from a dimension of a capability at a finer granularity, further implement unified authentication management on the communication apparatus from the dimension of the capability, and expand a management range of capability authentication.

Optionally, obtaining the first communication capability of the communication apparatus may include: receiving the first communication capability reported by the communication apparatus.

For example, the communication apparatus may send the first communication capability to the first network element. Further, the communication apparatus may send the first communication capability to the first network element when the communication apparatus passes primary authentication, or the communication apparatus may send the first communication capability to the first network element when the security protection between the communication apparatus and the first network element is enabled. For a primary authentication process of the communication apparatus, refer to descriptions of a related technology. Details are not described herein. In this embodiment, a condition of sending the first communication capability is further limited by using an authentication result of the primary authentication or on a premise that the security protection between the communication apparatus and the first network element is activated, so that the sending of the first communication capability is affected by the authentication result of the primary authentication or the security protection between the communication apparatus and the first network element. This avoids sending the first communication capability when the primary authentication fails, the primary authentication is not passed, or there is no security protection, and avoids performing invalid exchange of the first identification information by using the first communication capability, so that an authentication constraint condition of the communication apparatus is added, and authentication security and effectiveness of the communication apparatus are further improved.

For example, the communication apparatus may send the first communication capability to the first network element by using the network access request. The first communication capability may be included in the network access request. The first communication capability is set in the network access request, so that the network access request can be used to carry more information, to improve information transmission efficiency.

In this embodiment, after the first communication capability of the communication apparatus is obtained, whether the at least one communication capability in the identifier obtaining policy includes the first communication capability may be determined, and when the at least one communication capability in the identifier obtaining policy includes the first communication capability, the identifier obtaining request is sent to the communication apparatus. The first communication capability of the communication apparatus is used as a basis for determining whether to initiate the identifier obtaining request, and that the first communication capability belongs to the at least one communication capability in the identifier obtaining policy is used as an authentication start condition, so that a communication apparatus having an authentication requirement can be authenticated, to improve authentication effectiveness and efficiency of the communication apparatus. This further reduces an access risk of a communication network, and improves security of the communication network.

**In** another optional implementation, before step 201 is performed, whether the communication apparatus meets an authentication trigger condition may be determined. Specifically, a step of determining the authentication trigger condition may include:
determining, according to a device verification policy, that the communication apparatus meets the authentication trigger condition.

The device verification policy may include preset apparatus information of a communication apparatus that has a device security verification requirement. For example, the device verification policy may include at least one piece of identification information. Each piece of identification information may be identification information of a corresponding communication apparatus.

Optionally, the device verification policy may further include a verification identifier. That the first network element determines, according to the device verification policy, that the communication apparatus meets the authentication trigger condition may include: obtaining a verification identifier from the communication apparatus; and if it is determined that the verification identifier of the communication apparatus is the same as the verification identifier in the device verification policy, determining that the communication apparatus meets the authentication trigger condition. The verification identifier may be a predefined symbol or parameter of the communication apparatus on which security authentication needs to be performed. For example, the verification identifier may be set to a symbol A. If the apparatus information of the communication apparatus includes the symbol A, the communication apparatus meets the authentication trigger condition. The verification identifier may be set to a parameter B, and different parameter values indicate whether the authentication trigger condition is met. For example, when a value of the verification parameter B of the communication apparatus is 1, it is determined that the communication apparatus meets the authentication trigger condition. When a value of the verification parameter B of the communication apparatus is 0, it is determined that the communication apparatus does not meet the authentication trigger condition.

In this embodiment, whether the communication apparatus meets the authentication trigger condition is determined according to the device verification policy. When the authentication trigger condition is met, the authentication request may be sent to the communication apparatus, and the authentication information is received from the communication apparatus, to verify authenticity of the first identification information of the communication apparatus. The device verification policy is used as a prerequisite for determining the authentication trigger condition, so that whether the communication apparatus meets the authentication trigger condition can be determined, and more effective security authentication can be performed on the communication apparatus, to improve authentication security. This further reduces the access risk of the communication network, and improves the security of the communication network.

Further, optionally, the device verification policy includes at least one piece of identification information, and determining, according to the device verification policy, that the communication apparatus meets the authentication trigger condition includes:
if the at least one piece of identification information in the device verification policy includes the first identification information, determining that the communication apparatus meets the authentication trigger condition.

Optionally, that the at least one piece of identification information in the device verification policy includes the first identification information means that the at least one piece of identification information in the device verification policy includes identification information that is the same as the first identification information. For detailed content of the identification information, refer to the descriptions of S203 in the foregoing embodiment. Details are not described herein again.

The identification information may include an apparatus model or an apparatus capability. The apparatus model or the apparatus capability may be represented by using one or more symbols.

In this embodiment, the at least one piece of identification information is set in the device verification policy, and the at least one piece of identification information may be the identification information of the communication apparatus on which security authentication needs to be performed. The first identification information of the communication apparatus is detected by using the at least one piece of identification information, so that whether the communication apparatus meets the authentication trigger condition can be accurately determined, and the authentication trigger condition is used as a prerequisite for authenticating the communication apparatus, to effectively improve the authentication security of the communication apparatus. This further reduces the access risk of the communication network, and improves the security of the communication network.

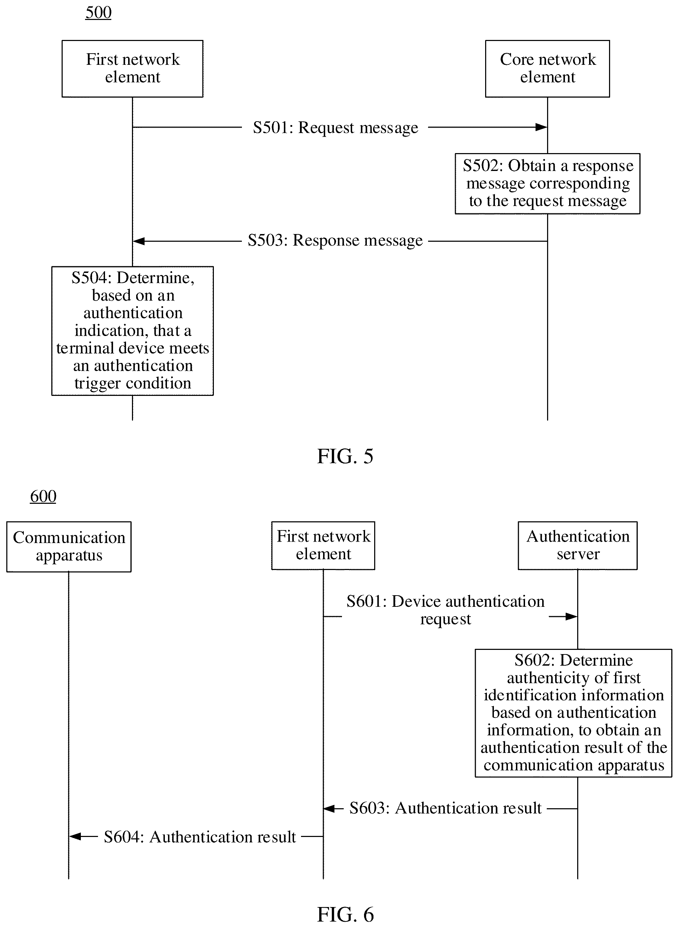

FIG. 5 is a schematic flowchart of a communication method 500 according to an embodiment of this application. As shown in FIG. 5, a difference from the foregoing embodiment lies in that the method 500 may include the following steps.

S501: A first network element sends a request message to a core network element. Correspondingly, the core network element may receive the request message sent by the first network element. The request message includes first identification information.

S502: The core network element obtains a response message corresponding to the request message, where the response message includes an authentication indication.

Optionally, the core network element may determine the authentication indication based on a binding relationship corresponding to the first identification information, and determine the response message based on the authentication indication. The binding relationship corresponding to the first identification information includes the first identification information and the authentication indication.

Optionally, the core network element may determine, based on the first identification information in the request message, a DCC authentication indication corresponding to the first identification information, and determines the response message based on the DCC authentication indication. Specifically, whether the corresponding DCC authentication indication exists in TAC information in PEI information may be determined based on the first identification information, for example, a PEI. If the corresponding DCC authentication indication exists, DCC authentication indication information may be used as the authentication indication, and sent to the first network element by using the response message. It should be noted that the core network element is configured with a correspondence between the first identification information and the DCC authentication indication.

The authentication indication is used to determine that a communication apparatus has a DCC check requirement, and the communication apparatus having the DCC requirement meets an authentication trigger condition. This may be understood as that the communication apparatus determines, based on the authentication indication, to trigger device authentication on the communication apparatus.

S503: The core network element sends the response message to the first network element. Correspondingly, the first network element obtains the response message corresponding to the request message from the core network element.

S504: The first network element determines, based on the authentication indication, that the communication apparatus meets the authentication trigger condition.

In this embodiment, the first network element sends the request message to the core network element, and obtains the response message fed back by the core network element. Through interactive transmission of the request message and the response message, the first network element can obtain the authentication indication of the core network element for the communication apparatus, and determine, based on the authentication indication, that the communication apparatus meets the authentication trigger condition. Whether the communication apparatus meets the authentication trigger condition can be clearly indicated by using the authentication indication of the core network element for the communication apparatus, to implement more effective security authentication on the communication apparatus. This further reduces an access risk of a communication network, and improves security of the communication network.

In a possible design, the core network element may include a unified data management UDM network element or an equipment identity register EIR network element.

FIG. 6 is a schematic flowchart of a communication method 600 according to an embodiment of this application. As shown in FIG. 6, a difference from the foregoing embodiment lies in that the method may further include the following steps.

S601: A first network element sends a device authentication request to an authentication server. Correspondingly, the authentication server receives the device authentication request.

The device authentication request includes authentication information, and the device authentication request indicates the authentication server to determine authenticity of first identification information based on the authentication information, to determine an authentication result of a communication apparatus.

S602: The authentication server determines the authenticity of the first identification information based on the authentication information, to obtain the authentication result of the communication apparatus.

The authentication result indicates whether the communication apparatus passes authenticity authentication. Further, the authentication result may be used to determine whether the communication apparatus passes device authentication.

Optionally, the authentication information may include first signature information and the first identification information. In this case, step 602 performed by the authentication server may include: querying, based on the first identification information, a binding relationship corresponding to the first identification information, to obtain an authentication credential in the binding relationship, where the binding relationship is a correspondence between the first identification information and the authentication credential; executing a digital signature on the first identification information based on the authentication credential in the binding relationship, to obtain verification signature information; and if the verification signature information is the same as the first signature information, determining that the communication apparatus passes the authenticity authentication, or if the signature information is different from the first signature information, determining that the communication apparatus does not pass the authenticity authentication.

Optionally, the authentication information may further include second signature information, generation time of the authentication information, and the first identification information. In this case, step 602 performed by the authentication server may be: querying, based on the first identification information, a binding relationship corresponding to the first identification information, to obtain an authentication credential in the binding relationship; executing a digital signature on the first identification information and the generation time of the authentication information based on the authentication credential in the binding relationship, to obtain verification signature information; and if the verification signature information is the same as the second signature information, determining that the communication apparatus passes the authenticity authentication, or if the verification signature information is different from the second signature information, determining that the communication apparatus does not pass the authenticity authentication.

S603: The authentication server feeds back the authentication result to the first network element. Correspondingly, the first network element receives the authentication result fed back by the authentication server.

Optionally, the first network element may further perform the following step.

S604: The first network element sends the authentication result to the communication apparatus.

Correspondingly, the communication apparatus may receive the authentication result sent by the first network element, where the authentication result indicates whether the communication apparatus passes the authenticity authentication.

In this embodiment, the first network element sends the authentication information to the authentication server, and completes the authenticity authentication on the communication apparatus by using the authentication server, to implement accurate authentication on the communication apparatus. After obtaining the authentication result, the first network element may further send the authentication result to the communication apparatus, so that the communication apparatus obtains the authentication result in time and performs an operation corresponding to the authentication result. The authentication result of the communication apparatus is synchronized, so that effective authenticity authentication on communication apparatus can be implemented. Further, when the communication apparatus that passes the authenticity authentication accesses a communication network, an access risk of the communication network can be reduced, and security of the communication network can be improved.

For ease of understanding of the technical solutions of this application, the technical solutions of this application are described in detail by using an example in which the first identification information indicates an apparatus model of the communication apparatus. The first identification information includes a type allocation code TAC. The first identification information may be an IMEI, a PEI, or the TAC. The first identification information may alternatively be a model identifier of the communication apparatus.

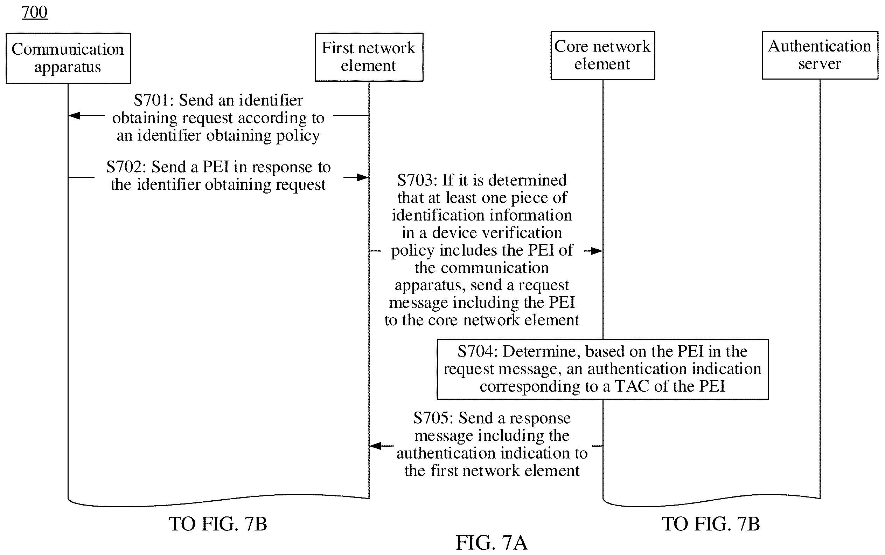

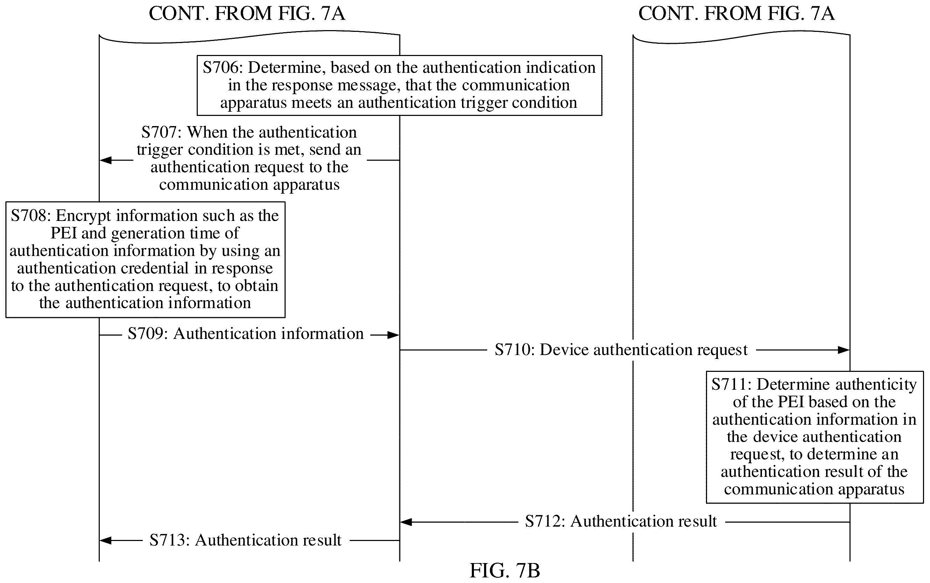

FIG. 7A and FIG. 7B are an example flowchart of a communication method according to an embodiment of this application. With reference to FIG. 7A and FIG. 7B, the communication method 700 may include the following steps.

S701: A first network element sends an identifier obtaining request to a communication apparatus according to an identifier obtaining policy. Correspondingly, the communication apparatus receives the identifier obtaining request.

Optionally, the identifier obtaining policy may include at least one communication capability, and step 701 may include: obtaining a first communication capability of the communication apparatus; and if the at least one communication capability in the identifier obtaining policy includes the first communication capability, sending the identifier obtaining request to the communication apparatus.

Optionally, before step 701 is performed, the communication apparatus sends a verification request to the first network element. Correspondingly, the first network element receives the verification request. The first network element may start to perform step 701 based on the verification request.

S702: The communication apparatus sends first identification information to the first network element in response to the identifier obtaining request. A first identifier may be an IMEI, a PEI, or a TAC. It should be noted that this embodiment is described by using the PEI as the first identifier. In an actual implementation, the first identifier may be any one of the IMEI, the PEI, or the TAC, or may be other identification information including the TAC. Correspondingly, the first network element receives the PEI.

S703: If determining that at least one piece of identification information in a device verification policy includes the PEI of the communication apparatus, the first network element sends a request message including the PEI to a core network element.

S704: The core network element determines, based on the PEI in the request message, an authentication indication corresponding to a TAC of the PEI.

Optionally, the authentication indication is indication information that is set by using a TAC value of the PEI. When obtaining the authentication indication, the first network element may determine that the communication apparatus meets an authentication trigger condition.

S705: The core network element sends a response message including the authentication indication to the first network element. Correspondingly, the first network element may receive the response message.

S706: The first network element determines, based on the authentication indication in the response message, that the communication apparatus meets the authentication trigger condition.

S707: When the authentication trigger condition is met, the first network element sends an authentication request to the communication apparatus. Correspondingly, the communication apparatus may receive the authentication request. The authentication request may include the PEI.

Optionally, the first network element may determine, not based on the authentication indication, that the communication apparatus meets the authentication trigger condition, and further send the authentication request to the communication apparatus. In this case, the first network element determines, based on an authentication trigger condition that is locally configured, to send the authentication request to the communication apparatus. For details, refer to the descriptions in step S201. Further, the first network element may skip steps S703 to S706, and the first network element determines, based on the authentication trigger condition that is locally configured, to send the authentication request to the communication apparatus, and determine whether the communication apparatus meets the authentication trigger condition.

S708: The communication apparatus may perform cryptographic processing on information such as the PEI and generation time of authentication information by using an authentication credential in response to the authentication request, to obtain the authentication information. The cryptographic processing may be encryption or digital signature.

S709: The communication apparatus may send the authentication information to the first network element, where the authentication information is used to verify authenticity of the first identification information of the communication apparatus. Correspondingly, the first network element may receive the authentication information.

S710: The first network element may send a device authentication request to an authentication server, where the device authentication request includes the authentication information.

S711: The authentication server determines authenticity of the PEI based on the authentication information in the device authentication request, to determine an authentication result of the communication apparatus. Determining the authenticity of the PEI may be determining authenticity of all or a part of information about the PEI, and determining the authenticity of the part of information of the PEI may be determining authenticity of the TAC in the PEI.

S712: The authentication server sends the authentication result of the communication apparatus to the first network element. Correspondingly, the first network element may receive the authentication result from the authentication server.

S713: The first network element may send the authentication result to the communication apparatus.

For ease of understanding of the technical solutions of this application, the technical solutions of this application are described in detail by using an example in which the first identification information indicates a communication capability of the communication apparatus. The first identification information includes at least one piece of 5G capability information supported by the communication apparatus.

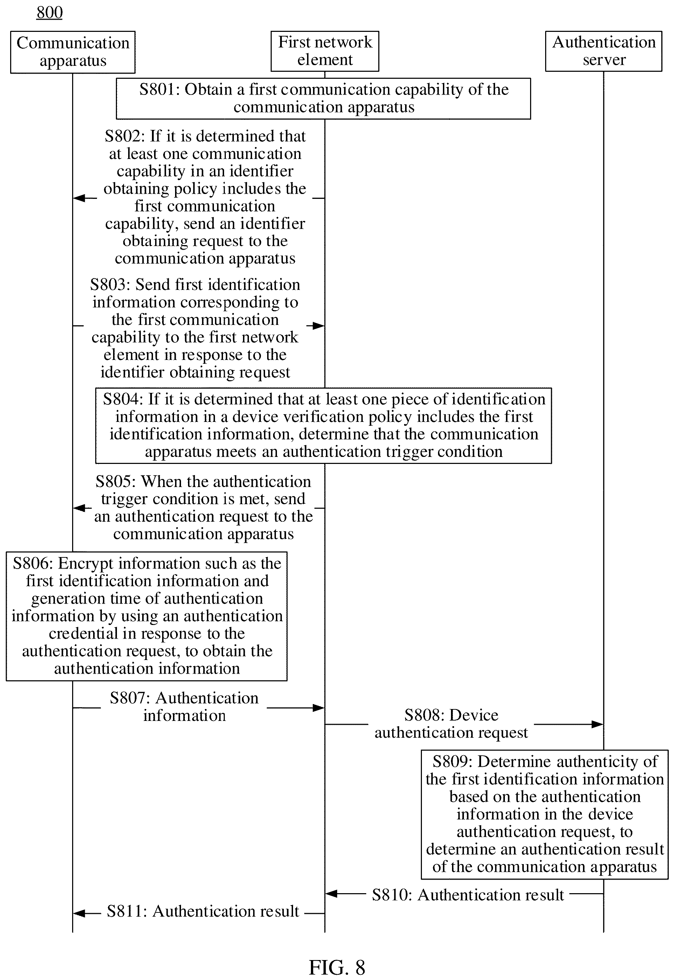

FIG. 8 is an example flowchart of a communication method according to an embodiment of this application. With reference to FIG. 8, the communication method 800 may include the following steps.

S801: A first network element obtains a first communication capability of a communication apparatus.

Optionally, the first communication capability is a communication capability of the communication apparatus, and may include at least one piece of 5G capability information.

S802: If determining that at least one communication capability in an identifier obtaining policy includes the first communication capability, the first network element sends an identifier obtaining request to the communication apparatus. Correspondingly, the communication apparatus may receive the identifier obtaining request.

S803: The communication apparatus sends first identification information corresponding to the first communication capability of the communication apparatus to the first network element in response to the identifier obtaining request. Correspondingly, the first network element receives the first identification information corresponding to the first communication capability of the communication apparatus.

S804: If determining that at least one piece of identification information in a device verification policy includes the first identification information, the first network element determines that the communication apparatus meets an authentication trigger condition.

Optionally, the communication apparatus may send the first communication capability to the first network element not based on the identifier obtaining request. In this case, the communication apparatus sends the first communication capability to the first network element by default. Further, the first network element may skip steps S802 and S803, and directly determine, based on the first communication capability obtained from the communication apparatus, whether the communication apparatus meets the authentication trigger condition.

S805: When the authentication trigger condition is met, the first network element sends an authentication request to the communication apparatus. Correspondingly, the communication apparatus receives the authentication request. The authentication request may include the first identification information corresponding to the communication capability of the communication apparatus.

S806: The communication apparatus may execute a digital signature on information such as the first identification information and generation time of authentication information by using an authentication credential in response to the authentication request, to obtain the authentication information.

S807: The communication apparatus may send the authentication information to the first network element. Correspondingly, the first network element may receive the authentication information. The authentication information is used to verify authenticity of the communication capability corresponding to the first identification information and/or authenticity of the generation time of the authentication information.

Optionally, the first network element may determine, not based on the authentication indication, that the communication apparatus meets the authentication trigger condition, and further send the authentication request to the communication apparatus. In this case, the first network element determines, based on an authentication trigger condition that is locally configured, to send the authentication request to the communication apparatus. For details, refer to the descriptions in step S201. Further, the first network element may skip steps S802 to S806, and the first network element determines, based on the authentication trigger condition that is locally configured, to send the authentication request to the communication apparatus, and determine whether the communication apparatus meets the authentication trigger condition.

S808: The first network element may send a device authentication request to an authentication server, where the device authentication request includes the authentication information.

S809: The authentication server verifies, based on the authentication information in the device authentication request, authenticity of the communication capability supported by the communication apparatus and/or the authenticity of the generation time of the authentication information, to determine an authentication result of the communication apparatus.

S810: The authentication server sends the authentication result of the communication apparatus to the first network element. Correspondingly, the first network element may receive the authentication result from the authentication server.

S811: The first network element may send the authentication result to the communication apparatus.

For ease of understanding of the technical solutions of this application, the technical solutions of this application are described in detail by using an example in which the first identification information indicates an apparatus model of the communication apparatus. The first identification information may be a model ID. The first identification information may alternatively be a model identifier of the communication apparatus.

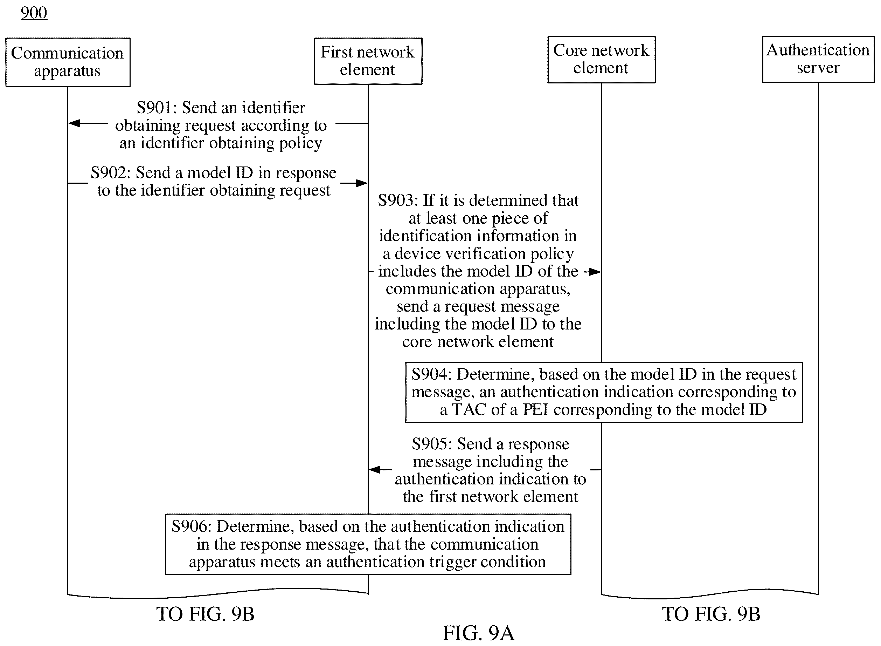

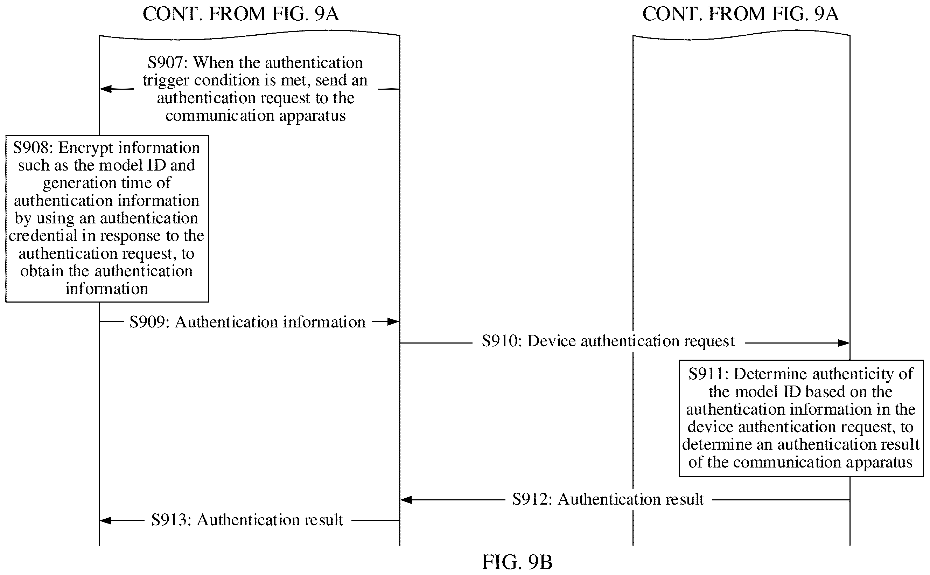

FIG. 9A and FIG. 9B are an example flowchart of a communication method according to an embodiment of this application. With reference to FIG. 9A and FIG. 9B, the communication method 900 may include the following steps.

S901: A first network element sends an identifier obtaining request to a communication apparatus according to an identifier obtaining policy. Correspondingly, the communication apparatus receives the identifier obtaining request.

Optionally, the identifier obtaining policy may include at least one communication capability, and step 901 may include: obtaining a first communication capability of the communication apparatus; and if the at least one communication capability in the identifier obtaining policy includes the first communication capability, sending the identifier obtaining request to the communication apparatus.

Optionally, the identifier obtaining policy may further include obtaining time, and the first network element may send the identifier obtaining request to the communication apparatus based on the obtaining time. For details, refer to the descriptions in the foregoing embodiments. Details are not described herein again.

Optionally, the identifier obtaining policy may further include direct triggering, that is, the first network element may directly send the identifier obtaining request to the communication apparatus.

S902: The communication apparatus sends a model ID to the first network element in response to the identifier obtaining request. Correspondingly, the first network element receives the model ID.

S903: If determining that at least one piece of identification information in a device verification policy includes the model ID of the communication apparatus, the first network element sends a request message including the model ID to a core network element.

Optionally, the communication apparatus may send the model ID of the communication apparatus to the first network element not based on the identifier obtaining request. In this case, the communication apparatus sends the model ID of the communication apparatus to the first network element by default. Further, the first network element may skip steps S901 and S902, and directly determine, based on the model ID obtained from the communication apparatus, whether the communication apparatus meets an authentication trigger condition.

S904: The core network element determines, based on the model ID in the request message, an authentication indication corresponding to the model ID.

S905: The core network element sends a response message including the authentication indication to the first network element. Correspondingly, the first network element may receive the response message.

S906: The first network element determines, based on the authentication indication in the response message, that the communication apparatus meets the authentication trigger condition.

S907: When the authentication trigger condition is met, the first network element sends an authentication request to the communication apparatus. Correspondingly, the communication apparatus may receive the authentication request. The authentication request may include the model ID.

Optionally, the first network element may determine, not based on the authentication indication, that the communication apparatus meets the authentication trigger condition, and further send the authentication request to the communication apparatus. In this case, the first network element determines, based on an authentication trigger condition that is locally configured, to send the authentication request to the communication apparatus. For details, refer to the descriptions in step S201. Further, the first network element may skip steps S903 to S905, and the first network element determines, based on the authentication trigger condition that is locally configured, to send the authentication request to the communication apparatus, and determine whether the communication apparatus meets the authentication trigger condition.

S908: The communication apparatus may execute a digital signature on information such as the model ID and generation time of authentication information by using an authentication credential in response to the authentication request, to obtain the authentication information.

S909: The communication apparatus may send the authentication information to the first network element, where the authentication information is used to verify authenticity of first identification information of the communication apparatus. Correspondingly, the first network element may receive the authentication information.

S910: The first network element may send a device authentication request to an authentication server, where the device authentication request includes the authentication information.

S911: The authentication server determines authenticity of the model ID based on the authentication information in the device authentication request, to determine an authentication result of the communication apparatus.

S912: The authentication server sends the authentication result of the communication apparatus to the first network element. Correspondingly, the first network element may receive the authentication result from the authentication server.

S913: The first network element may send the authentication result to the communication apparatus.

For understanding of the technical solutions of this application, the technical solutions of this application are described in detail by using an example in which the first identification information indicates an apparatus model or a communication capability of the communication apparatus.

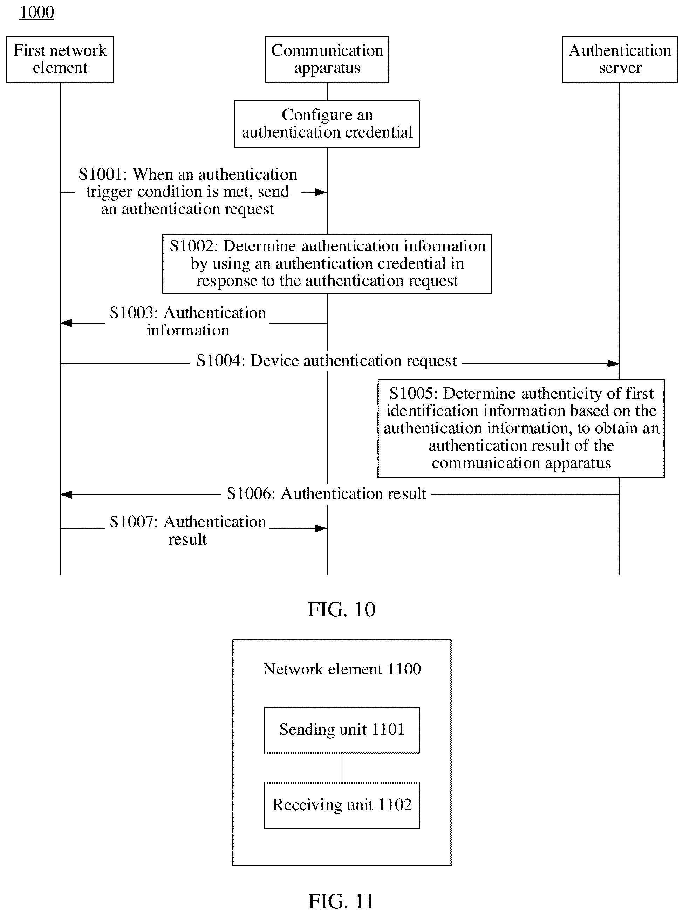

FIG. 10 is an example flowchart of a communication method according to an embodiment of this application. With reference to FIG. 10, the communication method 1000 may include the following steps.

S1001: When an authentication trigger condition is met, a first network element sends an authentication request to a communication apparatus. Correspondingly, the communication apparatus receives the authentication request sent by the first network element.

S1002: The communication apparatus determines authentication information by using an authentication credential in response to the authentication request.

S1003: The communication apparatus sends the authentication information to the first network element. Correspondingly, the first network element receives the authentication information. The authentication information is used to verify authenticity of first identification information of the communication apparatus.

S1004: The first network element sends a device authentication request to an authentication server. Correspondingly, the authentication server receives the device authentication request.

The device authentication request includes the authentication information, and the device authentication request indicates the authentication server to determine the authenticity of the first identification information based on the authentication information, to determine an authentication result of the communication apparatus.

S1005: The authentication server determines the authenticity of the first identification information based on the authentication information, to obtain the authentication result of the communication apparatus.

S1006: The authentication server feeds back the authentication result to the first network element. Correspondingly, the first network element receives the authentication result fed back by the authentication server.

Optionally, the first network element may further perform the following step.

S1007: The first network element sends the authentication result to the communication apparatus.

Correspondingly, the communication apparatus may receive the authentication result sent by the first network element, where the authentication result indicates whether the communication apparatus passes authenticity authentication.

FIG. 11 is a block diagram of a network element 1100 according to an embodiment of this application. The apparatus 1100 may include a sending unit 1101 and a receiving unit 1102.

**In** a possible implementation, the communication apparatus 1100 may perform the steps performed by the first network element in the method 200.

The sending unit 1101 may be configured to send an authentication request to a communication apparatus when an authentication trigger condition is met, where the authentication request indicates the communication apparatus to determine authentication information by using an authentication credential, the authentication credential corresponds to first identification information of the communication apparatus, and the first identification information indicates an apparatus model or a communication capability of the communication apparatus.

The receiving unit 1102 may be configured to receive the authentication information, where the authentication information is used to verify authenticity of the first identification information of the communication apparatus.

Optionally, when the first identification information indicates the apparatus model of the communication apparatus, the first identification information includes a type allocation code TAC.

Optionally, the first identification information is an IMEI or a PEI.

Optionally, when the first identification information indicates the communication capability of the communication apparatus, the first identification information includes at least one piece of 5G capability information supported by the communication apparatus.

Optionally, when the first identification information indicates the apparatus model of the communication apparatus, the first identification information is a model identifier of the communication apparatus.

Optionally, the sending unit 1101 may be further configured to send an identifier obtaining request to the communication apparatus according to an identifier obtaining policy, where the identifier obtaining request indicates the communication apparatus to feed back the first identification information; and
the receiving unit 1102 may be further configured to receive the first identification information fed back by the communication apparatus.

Optionally, the identifier obtaining policy includes at least one communication capability, and the sending unit 901 may be further configured to:
obtain a first communication capability of the communication apparatus; and
if it is determined that the at least one communication capability in the identifier obtaining policy includes the first communication capability, send the identifier obtaining request to the communication apparatus.

Optionally, the apparatus 1100 further includes:
a trigger unit, configured to determine, according to a device verification policy, that the communication apparatus meets the authentication trigger condition.

Optionally, the device verification policy includes at least one piece of identification information, and the trigger unit may be specifically configured to:
if it is determined that the at least one piece of identification information in the device verification policy includes the first identification information, determine that the communication apparatus meets the authentication trigger condition.

Optionally, the sending unit 1101 may be further configured to send a request message to a core network element, where the request message includes the first identification information; and
the receiving unit 1102 may be further configured to obtain a response message corresponding to the request message from the core network element, where the response message includes an authentication indication.

The trigger unit may be further configured to determine, based on the authentication indication in the response message, that the communication apparatus meets the authentication trigger condition.

Optionally, the core network element includes a unified data management UDM network element or an equipment identity register EIR network element.

Optionally, the sending unit 1101 may be further configured to send a device authentication request to an authentication server, where the device authentication request includes the authentication information, and the device authentication request indicates the authentication server to determine the authenticity of the first identification information based on the authentication information, to determine an authentication result of the communication apparatus.

The receiving unit 1102 may be further configured to receive the authentication result fed back by the authentication server, where the authentication result indicates whether the communication apparatus passes authenticity authentication.

Optionally, the sending unit 1101 may be further configured to send the authentication result to the communication apparatus.

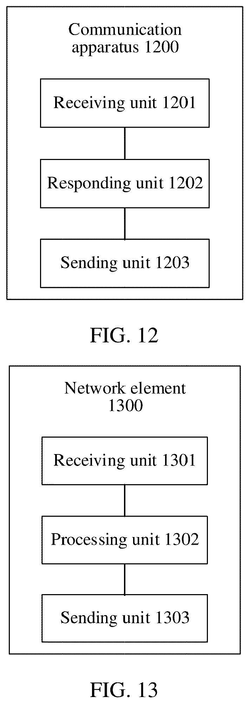

FIG. 12 is a block diagram of a communication apparatus 1200 according to an embodiment of this application. The apparatus 1200 may include a receiving unit 1201, a responding unit 1202, and a sending unit 1203.

In a possible implementation, the communication apparatus 1200 may perform the steps performed by the communication apparatus in the method 200.

The receiving unit 1201 is configured to receive an authentication request sent by a first network element, where the authentication request is sent when the first network element determines that the communication apparatus meets an authentication trigger condition.

The responding unit 1202 is configured to determine authentication information by using an authentication credential in response to the authentication request, where the authentication credential corresponds to first identification information of the communication apparatus, and the first identification information indicates a device model or a communication capability of the communication apparatus.

The sending unit 1203 is configured to send the authentication information to the first network element, where the authentication information is used to verify authenticity of the first identification information of the communication apparatus.

Optionally, when the first identification information indicates the apparatus model of the communication apparatus, the first identification information includes a type allocation code TAC.

Optionally, the first identification information is an IMEI or a PEI.

Optionally, when the first identification information indicates the communication capability of the communication apparatus, the first identification information includes at least one piece of 5G capability information supported by the communication apparatus.

Optionally, when the first identification information indicates the apparatus model of the communication apparatus, the first identification information is a model identifier of the communication apparatus.

Optionally, the receiving unit 1201 is further configured to receive an identifier obtaining request sent by the first network element according to an identifier obtaining policy; and
the sending unit 1203 is further configured to send the first identification information to the first network element in response to the identifier obtaining request.

Optionally, the apparatus further includes:
a determining unit, configured to determine the authentication credential that has a binding relationship with the first identification information of the communication apparatus, where the binding relationship includes the first identification information of the communication apparatus and the authentication credential.

Optionally, the receiving unit 1201 is further configured to receive an authentication result sent by the first network element, where the authentication result indicates whether the communication apparatus passes authenticity authentication.

FIG. 13 is a block diagram of a network element 1300 according to an embodiment of this application. The apparatus 1300 may include a receiving unit 1301, a processing unit 1302, and a sending unit 1303.

**In** a possible implementation, the communication apparatus 1300 may perform the steps performed by the core network element in the method 500.

The receiving unit 1301 may be configured to receive a request message sent by a first network element, where the request message includes first identification information of the communication apparatus, and the first identification information indicates an apparatus model or a communication capability of the communication apparatus.

The processing unit 1302 may be configured to obtain a response message corresponding to the request message, where the response message includes an authentication indication, the authentication indication is used to determine that the communication apparatus meets an authentication trigger condition, the authentication trigger condition indicates the first network element to send an authentication request to the communication apparatus, the authentication request indicates the communication apparatus to determine authentication information by using an authentication credential, and the authentication credential corresponds to the first identification information of the communication apparatus.

The sending unit 1303 may be configured to send the response message to the first network element.

Optionally, when the first identification information indicates the apparatus model of the communication apparatus, the first identification information includes a type allocation code TAC.

Optionally, the first identification information is an IMEI or a PEI.

Optionally, when the first identification information indicates the communication capability of the communication apparatus, the first identification information includes at least one piece of 5G capability information supported by the communication apparatus.

Optionally, when the first identification information indicates the apparatus model of the communication apparatus, the first identification information is a model identifier of the communication apparatus.

Optionally, the core network element includes a unified data management UDM network element or an equipment identity register EIR network element. The first network element is an access management network element or a session management network element.

It should be understood that the communication apparatus herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus may be specifically the communication apparatus or the network device in the foregoing embodiments, and the apparatus may be configured to perform procedures and/or steps in the foregoing method embodiments. To avoid repetition, details are not described herein again.

The communication apparatus in the foregoing solutions has functions of implementing corresponding steps performed by the network device or the communication apparatus in the foregoing methods. The foregoing functions may be implemented by hardware, or may be implemented by hardware by executing corresponding software. The hardware or the software includes one or more modules corresponding to the function.

In embodiments of this application, the network elements shown in FIG. 11 and FIG. 13 and the communication apparatus shown in FIG. 12 may alternatively be chips or chip systems, for example, a system on chip (system on chip, SoC).

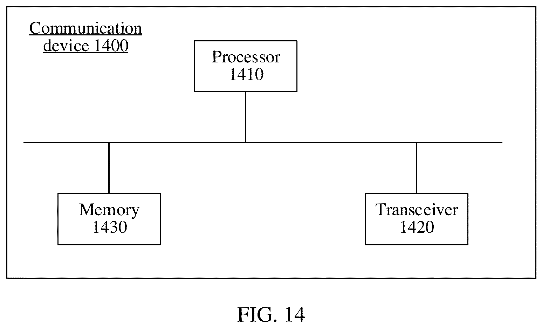

FIG. 14 is a block diagram of another communication device 1400 according to an embodiment of this application. The apparatus 1400 includes a processor 1410, a transceiver 1420, and a memory 1430. The processor 1410, the transceiver 1420, and the memory 1430 communicate with each other through an internal connection channel. The memory 1430 is configured to store instructions. The processor 1410 is configured to execute the instructions stored in the memory 1430, to control the transceiver 1420 to send a signal and/or receive a signal.

It should be understood that the communication device 1400 may be specifically the network element or the communication apparatus in the foregoing embodiments, and may be configured to perform steps and/or procedures corresponding to the foregoing method embodiments. Optionally, the memory 1430 may include a read-only memory and a random access memory, and provide instructions and data for the processor. A part of the memory may further include a non-volatile random access memory. For example, the memory may further store information of a device type. The processor 1410 may be configured to execute the instructions stored in the memory, and when the processor 1410 executes the instructions stored in the memory, the processor 1410 is configured to perform steps and/or procedures corresponding to the first device or the second device in the foregoing method embodiments. The transceiver 1420 may include a transmitter and a receiver. The transmitter may be configured to implement steps and/or procedures that correspond to the transceiver and that are used to perform a sending action. The receiver may be configured to implement steps and/or procedures that correspond to the transceiver and that are used to perform a receiving action.

It should be understood that, in this embodiment of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be implemented by using a hardware integrated logic circuit in the processor, or by using instructions in a form of software. The steps of the methods disclosed with reference to embodiments of this application may be directly performed by a hardware processor, or may be performed by a combination of hardware and software units in the processor. The software unit may be located in a mature storage medium in the art, for example, a random access memory, a flash memory, a read-only memory, a programmable read-only memory, an electrically erasable programmable memory, or a register. The storage medium is located in the memory, and the processor reads the instructions in the memory and completes the steps in the foregoing methods in combination with hardware of the processor. To avoid repetition, details are not described herein again.

An embodiment of this application provides a readable computer storage medium. The readable computer storage medium is configured to store a computer program, and the computer program is used to implement the methods shown in the possible implementations in the foregoing embodiments.

An embodiment of this application provides a computer program product. The computer program product includes a computer program (which may also be referred to as code or instructions), and when the computer program runs on a computer, the computer may perform the methods shown in the foregoing embodiments.

An embodiment of this application provides a chip system. The chip system is configured to support the foregoing methods, to implement functions shown in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

**In** addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a receive end, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending, by a first network element, an authentication request to a communication apparatus when an authentication trigger condition is met, wherein the authentication request indicates the communication apparatus to determine authentication information by using an authentication credential, the authentication credential corresponds to first identification information of the communication apparatus, and the first identification information indicates an apparatus model or a communication capability of the communication apparatus; and
receiving, by the first network element, the authentication information, wherein the authentication information is used to verify authenticity of the first identification information of the communication apparatus.

2. The method according to claim 1, wherein when the first identification information indicates the apparatus model of the communication apparatus, the first identification information comprises a type allocation code.

3. The method according to claim 2, wherein the first identification information is a permanent equipment identifier or an international mobile equipment identity.

4. The method according to claim 1, wherein when the first identification information indicates the communication capability of the communication apparatus, the first identification information comprises at least one piece of 5G capability information supported by the communication apparatus.

5. The method according to claim 1, wherein when the first identification information indicates the apparatus model of the communication apparatus, the first identification information is a model identifier of the communication apparatus.

6. The method according to any one of claims 1 to 5, wherein before sending, by the first network element, the authentication request to the communication apparatus, the method further comprises:
sending, by the first network element, an identifier obtaining request to the communication apparatus according to an identifier obtaining policy, wherein the identifier obtaining request indicates the communication apparatus to feed back the first identification information; and
receiving, by the first network element, the first identification information fed back by the communication apparatus.

7. The method according to claim 6, wherein the identifier obtaining policy comprises at least one communication capability, and sending the identifier obtaining request to the communication apparatus according to the identifier obtaining policy comprises:
obtaining a first communication capability of the communication apparatus; and
if it is determined that the at least one communication capability in the identifier obtaining policy comprises the first communication capability, sending the identifier obtaining request to the communication apparatus.

8. The method according to any one of claims 1 to 7, further comprising:
determining, according to a device verification policy, that the communication apparatus meets the authentication trigger condition.

9. The method according to claim 8, wherein the device verification policy comprises at least one piece of identification information, and determining, according to the device verification policy, that the communication apparatus meets the authentication trigger condition comprises:
if it is determined that the at least one piece of identification information in the device verification policy comprises the first identification information, determining that the communication apparatus meets the authentication trigger condition.

10. The method according to any one of claims 1 to 7, further comprising:
sending, by the first network element, a request message to a core network element, wherein the request message comprises the first identification information;
obtaining, by the first network element, a response message corresponding to the request message from the core network element, wherein the response message comprises an authentication indication; and
determining, by the first network element based on the authentication indication in the response message, that the communication apparatus meets the authentication trigger condition.

11. The method according to claim 10, wherein the core network element comprises a unified data management UDM network element or an equipment identity register EIR network element.

12. The method according to any one of claims 1 to 11, further comprising:
sending a device authentication request to an authentication server, wherein the device authentication request comprises the authentication information, and the device authentication request indicates the authentication server to determine the authenticity of the first identification information based on the authentication information, to determine an authentication result of the communication apparatus; and
receiving the authentication result fed back by the authentication server, wherein the authentication result indicates whether the communication apparatus passes authenticity authentication.

13. The method according to claim 12, further comprising:
sending the authentication result to the communication apparatus.

14. A communication method, comprising:
receiving, by a communication apparatus, an authentication request sent by a first network element, wherein the authentication request is sent when the first network element determines that the communication apparatus meets an authentication trigger condition;
determining, by the communication apparatus, authentication information by using an authentication credential in response to the authentication request, wherein the authentication credential corresponds to first identification information of the communication apparatus, and the first identification information indicates a device model or a communication capability of the communication apparatus; and
sending, by the communication apparatus, the authentication information to the first network element, wherein the authentication information is used to verify authenticity of the first identification information of the communication apparatus.

15. The method according to claim 14, wherein when the first identification information indicates the apparatus model of the communication apparatus, the first identification information comprises a type allocation code TAC.

16. The method according to claim 15, wherein the first identification information is a permanent equipment identifier or an international mobile equipment identity.

17. The method according to claim 14, wherein when the first identification information indicates the communication capability of the communication apparatus, the first identification information comprises at least one piece of 5G capability information supported by the communication apparatus.

18. The method according to claim 14, wherein when the first identification information indicates the apparatus model of the communication apparatus, the first identification information is a model identifier of the communication apparatus.

19. The method according to any one of claims 14 to 18, wherein before receiving, by the communication apparatus, the authentication request sent by the first network element, the method further comprises:
receiving, by the communication apparatus, an identifier obtaining request sent by the first network element according to an identifier obtaining policy; and
sending, by the communication apparatus, the first identification information to the first network element in response to the identifier obtaining request.

20. The method according to any one of claims 14 to 19, wherein before determining, by the communication apparatus, the authentication information by using the authentication credential, the method further comprises:
determining, by the communication apparatus, the authentication credential that has a binding relationship with the first identification information of the communication apparatus, wherein the binding relationship comprises the first identification information of the communication apparatus and the authentication credential.

21. The method according to any one of claims 14 to 20, further comprising:
receiving, by the communication apparatus, an authentication result sent by the first network element, wherein the authentication result indicates whether the communication apparatus passes authenticity authentication.

22. A communication method, comprising:
receiving, by a core network element, a request message sent by a first network element, wherein the request message comprises first identification information of a communication apparatus, and the first identification information indicates an apparatus model or a communication capability of the communication apparatus;
obtaining, by the core network element, a response message corresponding to the request message, wherein the response message comprises an authentication indication, the authentication indication is used to determine that the communication apparatus meets an authentication trigger condition, the authentication trigger condition indicates the first network element to send an authentication request to the communication apparatus, the authentication request indicates the communication apparatus to determine authentication information by using an authentication credential, and the authentication credential corresponds to the first identification information of the communication apparatus; and
sending, by the core network element, the response message to the first network element.

23. The method according to claim 22, wherein when the first identification information indicates the apparatus model of the communication apparatus, the first identification information comprises a type allocation code TAC.

24. The method according to claim 23, wherein the first identification information is a permanent equipment identifier or an international mobile equipment identity.

25. The method according to claim 22, wherein when the first identification information indicates the communication capability of the communication apparatus, the first identification information comprises at least one piece of 5G capability information supported by the communication apparatus.

26. The method according to any one of claims 22 to 25, wherein the core network element comprises a unified data management UDM network element or an equipment identity register EIR network element.

27. The method according to any one of claims 1 to 26, wherein the first network element is an access management network element or a session management network element.

28. A communication device, comprising a processor and a memory, wherein the memory stores instructions, and when the instructions are run by the processor, the method according to any one of claims 1 to 13, the method according to any one of claims 14 to 21, or the method according to any one of claims 22 to 26 or claim 27 is implemented.

29. A computer-readable storage medium, wherein the computer-readable storage medium comprises instructions, and when the instructions are run by a processor, the method according to any one of claims 1 to 13, the method according to any one of claims 14 to 21, or the method according to any one of claims 22 to 26 or claim 27 is implemented.

30. A computer program product, wherein the computer program product comprises instructions, and when the instructions are run by a processor, the method according to any one of claims 1 to 13, the method according to any one of claims 14 to 21, or the method according to any one of claims 22 to 26 or claim 27 is implemented.
